# EUROPÄISCHE PATENTSCHRIFT

(11) **EP 2 564 961 B1**
(45) Veröffentlichungstag und Bekanntmachung des Hinweises auf die Patenterteilung: **06.12.2017**
(21) Anmeldenummer: 12175822.1
(22) Anmeldetag: 11.07.2012
(51) Int. Cl.: B23B 51/00, B22F 7/06, B23P 15/32, C22C 19/07, C22C 29/08, C22C 38/08, C22C 38/10

(54) **Bohrer und Herstellungsverfahren für einen Bohrer**
Drill bit and manufacturing method for a drill bit
Foret et procédé de fabrication d'un foret

(30) Priorität: 01.09.2011 DE 102011081948
(43) Veröffentlichungstag der Anmeldung: 06.03.2013
(73) Patentinhaber: HILTI Aktiengesellschaft, 9494 Schaan (LI)
(72) Erfinder: Glaser, Arno, 9490 Vaduz (LI); Moseley, Steven, 6800 Feldkirch-Tisis (AT)
(74) Vertreter: Hilti Aktiengesellschaft Corporate Intellectual Property

(56) Entgegenhaltungen:
- EP-A1- 2 279 827
- AU-A- 3 384 784

## Beschreibung

### GEBIET DER ERFINDUNG

Die vorliegende Erfindung betrifft einen Bohrer, insbesondere einen Bohrmeißel für einen drehmeißelnden Abbau von Gestein, und ein Herstellungsverfahren für einen Bohrer, gemäß den Oberbegriffen von den Ansprüchen 1 und 7 und wie aus EP 2 279 827 A1 bekannt.

AU 3384784 A1 beschreibt ein Herstellungsverfahren für ein Schneidwerkzeug. Das Schneidwerkzeug hat eine harte Oberfläche aus Wolframkarbid und einen graduellen Übergang zu einem zähen Stahlkern. Der Kohlenstoffgehalt in dem Stahl soll derart eingestellt werden, dass die Aktivität des Kohlenstoffs in dem Stahl geringer als die Aktivität des Kohlenstoffs in dem Wolframkarbid ist.

### OFFENBARUNG DER ERFINDUNG

Ein erfindungsgemäßer Bohrer, der die Merkmale des Anspruchs 1 umfasst, hat einen Bohrkopf, ein Zwischenstück und einen Schaft. Der Bohrkopf ist aus einem gesinterten kohlenstoffhaltigen Hartmetall. Das Zwischenstück ist aus Stahl und längs einer Achse zwischen dem Bohrkopf und dem Schaft angeordnet. Eine Aktivität von Kohlenstoff in dem eisenhaltigen Zwischenstück ist für wenigstens eine Temperatur in einem Temperaturbereich von 1100 Grad Celsius bis 1450 Grad Celsius gleich und/oder größer als eine Aktivität von Kohlenstoff in dem gesinterten Hartmetall bei der Temperatur.

Die Aktivität ist ein Maß für die Änderung eines chemischen Potentials in Folge einer Konzentrationsänderung, hier in Folge einer lokalen Änderung der Konzentration von Kohlenstoff. Bestrebt die Gibb'sche Enthalpie zu senken diffundiert der Kohlenstoff typischerweise in Bereiche, in welchen seine Aktivität geringer und er im Mittel das chemische Potential absenken kann. Die Aktivität von Kohlenstoff in Stählen steigt typischerweise sowohl mit abnehmender Temperatur in einem Bereich von 1000 bis 1400 Grad Celsius und zunehmender Kohlenstoffkonzentration. Bei Hartmetallen, insbesondere bei in metallische Binder eingebettetem Wolframkarbid, zeigt die Aktivität in dem Temperaturbereich eine geringere Abhängigkeit von der Temperatur. Die Aktivität des Hartmetalls und vorzugsweise des Zwischenstücks können mittels derer Kohlenstoffkonzentration und auch durch Zugabe anderer Legierungsstoffe beeinflusst werden. Ferner kann die Aktivität durch die Prozessumgebung beeinflusst werden. Beispielsweise senkt eine Wasserstoff- oder Sauerstoff-reiche Prozessatmosphäre die Kohlenstoffkonzentration in Stahl und mittelbar die Aktivität von Kohlenstoff. Die Aktivität des Kohlenstoffs im Stahl oder Hartmetall kann beispielsweise in einer Sauerstoff-haltigen Gasatmosphäre bestimmt werden. Aus der sich einstellenden Kohlendioxid-konzentration kann das chemische Potential und die Aktivität des Kohlenstoffs in dem Festkörper abgeleitet werden. Ein analoges Messverfahren ist beispielsweise aus der JP 4225858 B2 bekannt. Ad initio Berechnungen ermöglichen basierend auf der Stoffzusammensetzung die Aktivität von Kohlenstoff in Stahl oder Hartmetall zu berechnen. Für die Bestimmung der Aktivität des hergestellten Bohrers sind Materialproben wenigstens 50 µm abseits des Fügebereichs zwischen dem Bohrkopf und dem Zwischenstück zu entnehmen, innerhalb des Fügebereichs kann bei der Herstellung aufgrund einer Diffusion ein Ausgleich des chemischen Potentials von Kohlenstoff stattfinden.

Ein erfindungsgemäßes Herstellungsverfahren für einen Bohrer, das die Merkmale des Anspruchs 7 umfasst, beinhaltet die Schritte:
Formen eines Grünlings aus einem kohlenstoffhaltigen Hartmetall und einem Binder zu einem Bohrkopf; Formen eines Zwischenstücks aus einem kohlenstoffhaltigen Eisen-Basis-pulver; Fügen des Bohrkopfs und des Zwischenstücks zu einem Halbzeug; Sintern des Halbzeugs bei einer Temperatur, bei welcher eine Aktivität des Kohlenstoff in dem Zwischenstück wenigstens so groß wie die Aktivität des Kohlenstoffs in dem Grünling ist; und materialschlüssiges Fügen des gesinterten Halbzeugs auf einem Schaft. Die Fügezone zwischen dem Bohrkopf und dem Zwischenstück ist bei einem Bohrer, insbesondere einem Bohrmeißel, sehr hohen mechanischen Belastungen ausgesetzt. Daher wird auf die Qualität und Festigkeit der Fügezone hohen Wert gelegt. Bei Versuchen den Bohrkopf auf das Zwischenstück zu sinterfügen ergab sich bei den meisten Stählen eine brüchige, mit mikroskopischen Hohlräumen versehene spröde Phase in der Fügezone. Mit aufwändigen Versuchsreihen kann die Aktivität des Kohlenstoffs als geeigneter Parameter identifiziert werden, der wenn in dem Bohrkopf höchstens gleich groß wie in dem Zwischenstück gewählt ist, ein Ausbilden einer brüchigen Fügezone verhindert. Die Konzentration des Kohlenstoffs in dem Hartmetall ist mit etwa 5 Gew.-% bis 7 Gew.-% deutlich höher als die Konzentration des Kohlenstoffs in dem Stahl. Der Kohlenstoff soll also überraschenderweise wenn überhaupt von dem Kohlenstoff-ärmeren Zwischenstück in das Kohlenstoff-reichere Hartmetall diffundieren.

Das Zwischenstück kann mit dem Bohrkopf als Grünling gefügt werden. Das Zwischenstück und der Bohrkopf werden gemeinsam bei einer Temperatur vorzugsweise in einem Bereich zwischen 1100 Grad Celsius und 1450 Grad Celsius kogesintert. Die Aktivität des Kohlenstoffs in dem Stahl ist bei der Temperatur größer als die Aktivität in dem Bohrkopf. Die Aktivität des Kohlenstoffs ist in dem Zwischenstück bei der Temperatur beispielsweise größer als 0,3. Ein alternatives Herstellungsverfahren sintert den Bohrkopf bei einer Temperatur zwischen 1300 Grad Celsius und 1470 Grad Celsius vor und fügt den gesinterten Bohrkopf mit dem Grünling des Zwischenstücks. Diese werden zusammen bei einer geringeren Temperatur, z.B. zwischen 1100 Grad Celsius und 1350 Grad Celsius, durch Sintern gefügt. Die Aktivität des Kohlenstoffs muss beim Fügen so eingestellt sein, dass sie im Zwischenstück höher als im Bohrkopf ist.

Die Aktivität des Kohlenstoffs in dem Zwischenstück sollte hoch sein, was für sich allein genommen durch einen hohen Kohlenstoffgehalt erreicht werden kann. Allerdings senkt der Kohlenstoffgehalt die Schmelztemperatur des Eisen-Basis-pulvers, was eine Formgebung und Sintern erschwert. Ein Kohlenstoffgehalt in dem Zwischenstück kann wenigstens 0,20 Gew.-%, beispielsweise wenigstens 0,5 Gew.-%, höchstens 1,5 Gew.-% beispielsweise höchsten 1,1 Gew.-% betragen. Ein hoher Nickelanteil von wenigstens 20 % bis maximal 80 %, vorzugsweise bis zu 40 % kann genutzt werden, um eine Aktivität des Kohlenstoff zu erhöhen, ergo bei einer geringeren Kohlenstoffkonzentration eine hohe Aktivität zu erhalten.

Eine Ausgestaltung sieht vor, dass ein Binder des gesinterten Hartmetalls einen Anteil zwischen 6 Gew.-% und 9 Gew.-% aufweist. Der Anteil des Binders beeinflusst maßgeblich den Kohlenstoffgehalt und die Aktivität des Kohlenstoffs in dem Hartmetall, dessen hartmetallische Phase vorzugsweise aus binären oder ternären Karbiden, z.B. Wolframkarbid, besteht. Der Binder kann Kobalt mit einem Anteil von wenigstens 20 Gew.-% aufweisen. Kobalt-reiche Binder, z.B. Binder rein aus Kobalt, zeigen bei den Sintertemperaturen eine relativ hohe Aktivität von größer 0,3.

Eine Ausgestaltung sieht vor, dass der Bohrkopf durch einen Sinterprozess materialschlüssig mit dem Zwischenstück verbunden ist. Das Zwischenstück ist vorzugsweise gesintert. Eine Ausgestaltung sieht vor, dass eine Länge des Bohrkopfs längs der Achse gleich oder geringer als eine Länge des Zwischenstücks ist.

### KURZE BESCHREIBUNG DER FIGUREN

Die nachfolgende Beschreibung erläutert die Erfindung anhand von exemplarischen Ausführungsformen und Figuren. In den Figuren zeigt:

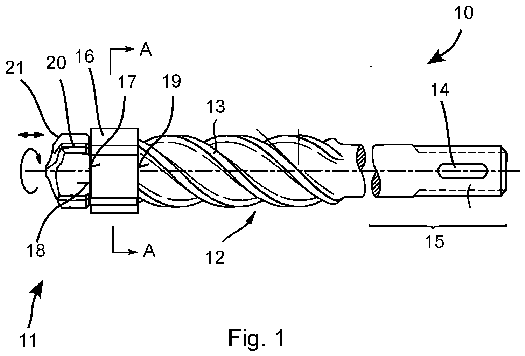

- Fig. 1: einen Bohrer;

### AUSFÜHRUNGSFORMEN DER ERFINDUNG

Fig. 1 zeigt eine Ausführungsform eines Bohrers 10, der insbesondere für einen Meißelbohrenden Einsatz geeignet ist. Der Bohrer 10 weist einen Bohrkopf 11 und einen Schaft 12 auf. Der Schaft 12 ist im wesentlichen zylindrisch und kann mit einer Wendel 13 und mit Nuten 14 im Bereich eines Einsteckendes 15 versehen sein.

Der Bohrkopf 11 ist an dem Schaft 12 über ein Zwischenstück 16 befestigt. Der Bohrkopf 11 ist mit seiner Unterseite 17 durch eine Diffusionszone, welche durch einen Sinterprozess hergestellt ist, materialschlüssig mit einer Seite 18 des Zwischenstücks 16 verbunden. Zusätzlich kann der Bohrkopf 11 mit dem Zwischenstück 16 thermomechanisch kraft- und formschlüssig verbunden sein. Der Schaft 12 ist mit einer anderen Seite 19 des Zwischenstücks 16 materialschlüssig verbunden, vorzugsweise verlötet oder verschweißt.

Der beispielhafte Bohrkopf 11 ist mit zwei Schneidkanten 20, 21 versehen. Die beiden Schneidkanten 20, 21 kreuzen sich unter einem Winkel im Bereich zwischen 20° und 120°. Der Bohrkopf 11 ist in der Form eines Vollkopfs hergestellt. Der gesamte Bohrkopf 11 mit den Schneidkanten 20, 21 und dem Zapfen 22 ist ein zusammenhängendes Element aus einem Material, nämlich Hartmetall. Das Hartmetall kann als Hartstoffphase Materialien aus der Klasse gesinterter Wolframkarbide enthalten. Das Wolframkarbid hat einen Anteil von wenigstens 70% des gesamten Hartmetalls. Ein oder mehrere Karbide aus der Gruppe z.B. Titankarbid, Vanadiumkarbid, Tantalkarbid, Niobkarbid, Tantalniobkarbid, Molibdänkarbid, Chromkarbid, Zirkoniumkarbid und Hafniumkarbid können dem Wolframkarbid zugemischt werden. Das Wolframkarbid liegt als Körner vor, die mit beispielsweise einem Durchmesser im Bereich von 0,4 bis 15 µm, z.B. vorzugsweise größer als 0,8 µm und/oder geringer als 10 µm, in einer Matrix aus einem metallischen Bindermaterial eingebettet sind. Der Binder kann Legierung aus Kobalt, Nickel, Eisen enthalten. Die Hartstoffphase hat einen Anteil von 90 Gew.-% bis 98 Gew.-%, vorzugsweise 91 Gew.-% bis 94 Gew.-% an der gesamten Mischung. Das Bindermaterial ist vorzugsweise mit einem Anteil zwischen 2 Gew.-% und 10 Gew.-%, vorzugsweise 6 Gew.-% bis 9 Gew.-% zugemischt.

Der Schaft 12 ist aus Stahl hergestellt. Der Stahl ist vorzugsweise unveredelt oder niederveredelt, das heißt Zusätze zu dem Stahl sind mit jeweiligen Anteilen von weniger als 5 Gew.-% zugemischt, insbesondere weist der Stahl einen Nickelanteil von weniger als 2 Gew.-% auf. Das Zwischenstück 16 aus der Eisenlegierung ist auf dem Schaft 12 aus Stahl vorzugsweise aufgeschweißt oder aufgelötet. Eine Fügezone mit hoher Qualität wird durch den hohen Eisenanteil in dem Zwischenstück 16 gewährleistet.

Ein Herstellungsverfahren für den Bohrer 10 läuft wie folgt ab. Der Bohrkopf 11 wird durch ein pulvermetallurgisches Verfahren hergestellt. Granulat eines Hartmetalls, z.B. Wolframkarbid, vermischt mit einem metallischen Bindermaterial, z.B. Kobalt, Nickel, Eisen, Chrom, Molybdän, und einer organischen Matrix werden in Form gepresst. Alternativ kann das Gemisch in eine Form gespritzt werden. Die organische Matrix wird herausgelöst. In diesem Stadium wird das Produkt Grünling genannt. Der Grünling des Bohrkopfs 11 hat im Wesentlichen die Form des späteren Bohrkopfs 11. Bei einer Temperatur von 1300 Grad Celsius bis 1470 Grad Celsius wird der Grünling gesintert. Die Sinterung von Hartmetallen auf Wolframkarbid Kobalt Basis beispielsweise erfolgt bei Temperaturen oberhalb 1330 °C. Die Sintertemperatur liegt damit höher als die Schmelztemperatur des Kobaltkohlenstoff und damit auch höher als die des Wolframkarbid-Kobaltkohlenstoff -Eutektikums (1309°C bzw. 1320°C). Ein Gefüge, das aus Wolframkarbid-Kristalliten eingelagert in einer Kobalt-reichen Bindephase besteht, lässt sich nur auf pulvermetallurgischem Wege realisierten. Sintert man bspw. ein Pulvergemisch aus feinkörnigem Monowolframcarbid und 6 Massen-% Kobalt bei 1400°C, so stellt sich ein Gleichgewicht zwischen festem Wolframkarbid und einer Schmelze entsprechend Konzentration ein. Bei genügend langsamer Abkühlung scheidet sich zunächst weiter Wolframkarbid aus, das bevorzugt an noch oder bereits vorhandenem Wolframkarbid ankristallisiert. In gleicher Weise wird auch das Wolframkarbid des Eutektikums angelagert, so dass keine typische eutektische Struktur im Gefüge der Hartmetalle beobachtet wird. Beim ersten Auftreten einer flüssigen Phase wächst die Biegefestigkeit der Rohlinge infolge starker Verdichtung stark an. Die flüssige Phase benetzt die Karbidkristallite und dringt in die Porenräume und Kapillaren ein und führt somit zu einem porenfreien Gefüge. Der erreichte und für Bohrköpfe geforderte Raumerfüllungsgrad liegt danach je nach Legierungstyp bei 99,8 bis 99,95 %. Die Ausbildung der Karbide im Gefüge der Hartmetalle ist dabei von besonderer Wichtigkeit.

Das Zwischenstück 16 wird ebenfalls durch ein pulvermetallurgisches Verfahren hergestellt. Die Eisen-Basis-Legierung wird als Granulat in einer organischen Matrix in Form gepresst. Alternativ kann das Gemisch in eine Form gespritzt werden. Die organische Matrix wird nachfolgend herausgelöst, um den Grünling des Zwischenstücks 16 herzustellen. Auf den Grünling des Zwischenstücks 16 wird der fertig gesinterte Bohrkopf 11 aufgesetzt. Bei einer Temperatur zwischen 1100 und 1350 Grad Celsius wird der Grünling anliegend an dem Bohrkopf 11 gesintert. Das Sintern der verwendeten Eisenlegierungen kann bei verglichen zu dem Hartmetall bei niedrigeren Temperaturen ohne Einbußen hinsichtlich der mechanischen Beständigkeit erfolgen. Allerdings steigt mit abnehmender Temperatur die Dauer für den Sinterprozess überproportional, weshalb Temperaturen im Bereich von 1200 bis 1350 Grad Celsius bevorzugt werden. Während des Sinterns des Grünlings für das Zwischenstück 16 erfolgt eine materialschlüssige und ggf. formschlüssige Verbindung zwischen dem bereits gesinterten Bohrkopfs 11 und dem sich ausbildenden Zwischenstücks 16. Die Stoffzusammensetzung des Bohrkopfs 11 und des Zwischenstücks 16 sind dafür geeignet zu wählen, andernfalls ergibt sich eine für Bohrmeißel nicht ausreichend mechanisch belastbare Fügezone. Auf geeignete Beispiele wird nachfolgend im Detail eingegangen.

Das Halbzeug aus dem fügegesinterten Bohrkopf und Zwischenstück wird auf den Schaft aufgeschweißt oder gelötet. Die Stoffzusammensetzung des Zwischenstücks ist auf gute Schweißbarkeit mit dem Schaft abgestimmt.

Nachfolgend sind Beispiele für Stoffzusammensetzungen des Hartmetalls und des Zwischenstücks angegeben, mit welchen erfolgreich ein Bohrer 10 gewünschter Qualität hergestellt werden kann.

Eine erste Gruppe der Hartmetalle besteht aus einem Hartstoff auf Basis eines Metallkarbids, vorzugsweise Wolframkarbids, und einem metallischen Binder, vorwiegend aus Kobalt. Der Binder hat einen Anteil von 6 Gew.-% bis 9 Gew.-%. Der Kohlenstoffgehalt in dem Hartmetall ist sehr engen Grenzen unterworfen, der Gehalt liegt im Bereich von 5,55 Gew.-% und 5,6 Gew.-%. Bei einem nur geringfügig höherem Gehalt, beispielsweise von 5,62 Gew.-% ist die Aktivität des Kohlenstoffs bei typischen Temperaturen des Sinters bei über 0,6, hierfür können keine Stoffzusammensetzungen für eisenbasierte Zwischenstücke aufgefunden werden, welche sich ohne Ausbilden einer geschwächten Fügezone fügesintern lassen.

Eine zweite Gruppe der Hartmetalle besteht aus einem Hartstoff auf Basis eines Metallkarbids, vorzugsweise Wolframkarbids, und einem metallischen Binder auf Eisennickelbasis. Der Binder hat einen Anteil von 7,5 Gew.-% bis 8,5 Gew.-% an dem gesamten Hartmetall. Bezogen auf den Binder liegt der Eisenanteil bei wenigstens 55 Gew.-% und höchstens 85 %, der Nickelanteil bei wenigstens 18 Gew.-% und höchstens 23 Gew.-%. Ein weiterer Bestandteil des Binders kann Kobalt mit einem Anteil zwischen 18 Gew.-% und 23 Gew.-% sein. Eine Besonderheit dieser Hartmetalle sind ihre vergleichsweise geringe Kohlenstoffaktivität zwischen 0,25 und 0,3 über einen Temperaturbereich zwischen 1100 Grad und 1350 Grad. Ein Kohlenstoffgehalt des Hartmetalls ist im Bereich zwischen 5,65 Gew.-% und 5,75 Gew.-% gewählt, um die gewünschte Härte des Hartmetalls zu erreichen. Beispiele für die zweite Gruppe sind Fe80Ni20 und Fe60Ni20Co20.

Eine dritte Gruppe der Hartmetalle besteht aus einem Hartstoff auf Basis eines Metallkarbids, vorzugsweise Wolframkarbids, und eines metallischen Binders auf Eisennickelbasis. Der Binder hat einen Anteil von 7,5 Gew.-% bis 8,5 Gew.-% an dem gesamten Hartmetall. Bezogen auf den Binder liegt der Eisenanteil zwischen 60 Gew.-% und 70 Gew.-%, der Nickelanteil zwischen 30 Gew.-% und 35 Gew.-%. Ein verbleibender Anteil des Binders kann Kobalt sein. Ein Kohlenstoffgehalt des Hartmetalls ist im Bereich zwischen 5,65 Gew.-% und 5,75 Gew.-% gewählt. Ein Beispiel für die dritte Gruppe ist Fe64.2Ni31 Co4.8. Die Aktivität des Kohlenstoffs in der dritten Gruppe ist etwas höher als in der zweiten Gruppe, etwa zwischen 0,28 und 0,32 über den Temperaturbereich zwischen 1000 Grad Celsius und 1400 Grad Celsius.

Eine erste Stoffgruppe für das Zwischenstück basiert auf Eisennickellegierungen. Der Nickelanteil liegt vorzugsweise im Bereich von 20 Gew.-% und 40 Gew.-%. Kobalt kann mit einem Anteil von bis zu 20 Gew.-% beigemischt sein. Der dominante Anteil ist Eisen. Weitere metallische Beimischungen und Silizium haben insgesamt einen Anteil von weniger als 1,0 Gew.-%. Beispiele sind Invar (FeNi36) und Kovar (FeCoNi29).

Eine zweite Stoffgruppe für das Zwischenstück basiert auf niedriglegierten Stählen mit einem Chromanteil im Bereich zwischen 1,2 Gew.-% und 2 Gew.-%. Der dominante Anteil ist Eisen. Weitere metallische Beimischungen und Silizium haben insgesamt einen Anteil von weniger als 1,0 Gew.-%. Ein Beispiel ist DIN 100Cr6. Bei einer Temperatur von 1250 Grad Celsius ist eine Kohlenstoffaktivität bei 0,27.

Ein Sinterfügeneines zum Bohrkopf gepressten Grünlings aus dem ersten Hartmetall kann mit der ersten Stoffgruppe des Zwischenstücks mit einer sprödfreien Fügezone erreicht werden. Mit einem Kohlenstoffanteil von wenigstens 0,6 Gew.-% kann die Aktivität des Kohlenstoffs auf einen Wert oberhalb der Aktivität des ersten Hartmetalls eingestellt werden. Ein Kohlenstoffgehalt von mehr als 0,8 Gew.-% führt zum Aufschmelzen des gepressten Grünlings des Zwischenstücks beim Sinterfügen und einer in Folge schlechten Anbindung und fehlerhaften Materialzusammensetzung aufgrund einsetzender Materialdiffusion. Die stark nickelhaltigen Zusammensetzungen, wie Invar (Nickelanteil >30 Gew.-%) zeigen vereinzelt ab 0,8 Gew.-% ein Absenken der Schmelztemperatur in den Bereich benötigter Sintertemperaturen für den Bohrkopf.

Invar mit 0,65 Gew.-% Kohlenstoff kann mit dem ersten Hartmetall (8,0 Gew.-% Kobalt, 5,60 Gew.-% Kohlenstoff) bei 1250 Grad Celsius ohne Sprödphase und Aufschmelzen des Grünlings sintergefügt werden. Die Aktivität des Kohlenstoffs liegt in dem Zwischenstück bei etwa 0,66 und in dem Hartmetall bei 0,6. Die leicht höhere Aktivität des Kohlenstoffs in dem Invar wird als ursächlich für die gute Verbindung angesehen. Bei Invar mit 0,4 Gew.-% Kohlenstoff ergab sich eine spröde Fügezone, die Aktivität des Kohlenstoffs bei der Sintertemperatur von 1250 Grad Celsius beträgt nur 0,4 in dem Invar. Die Aktivität des Kohlenstoffs kann zwar durch Erhöhen des Kohlenstoffgehalts beliebig gesteigert werden. Versuche mit Invar zeigten jedoch ab 0,75 Gew.-% Kohlenstoff ein Absenken der Schmelztemperatur, wodurch das Zwischenstück seine Form während des Sinterns verlor. Es ergibt sich somit nur ein kleines Fenster für geeignete Stoffzusammensetzungen.

Kovar mit 0,7 Gew.-% kann auf ein erstes Hartmetall (8,0 Gew.-% Kobalt, 5,60 Gew.-% Kohlenstoff) bei 1250 Grad Celsius ohne Sprödphase und Aufschmelzen des Grünlings sintergefügt werden. Die Aktivität des Kohlenstoffs ist in dem etwas Nickelärmeren Kovar verglichen zu Invar bei gleichem Kohlenstoffgehalt geringer. Die Aktivität bei genannter Zusammensetzung liegt bei etwa 0,7. Unterhalb eines Kohlenstoffgehalts von 0,5 Gew.-% waren nur teilweise gute Verbindungen, insbesondere nur bei geringen Sintertemperaturen möglich. Ein Aufschmelzen kann bis 0,8 Gew.-% Kohlenstoff nicht beobachten werden.

Die Sintertemperatur beeinflusst die Aktivität des Kohlenstoffs der ersten Stoffgruppe und der ersten Hartmetalle. Die Aktivität sinkt in der ersten Stoffgruppe mit zunehmender Temperatur und steigt gegenläufig in den ersten Hartmetallen. Ein niedrige Sintertemperatur im Bereich von 1100 Grad Celsius bis 1350 Grad Celsius erweist sich für das Sinterfügen dieser Kombinationen als vorteilhaft. Ein Sintern bei noch geringeren Temperaturen, führt zu einer fehlerhaften Ausbildung und Anbindung des Bohrkopfs.

Die zweite Stoffgruppe kann ebenfalls mit dem ersten Hartmetall sintergefügt werden. 100Cr6 kann mit einem Kohlenstoffanteil im Bereich zwischen 0,8 Gew.-% bis 1,1 Gew.-% ohne Sprödphase und Aufschmelzen verwendet werden. Die gewählten Sintertemperatur lag im Bereich von 1250 Grad Celsius.

Die zweite Gruppe der Hartmetalle kann mit der erster Stoffgruppe sintergefügt werden. Die Sintertemperaturen können im Bereich zwischen 1100 Grad Celsius und 1470 Grad Celsius gewählt werden. Ein Kohlenstoffgehalt ab 0,2 Gew.-% in der ersten Stoffgruppe erweist sich als ausreichend, was der niedrigeren Aktivität des Kohlenstoffs in den zweiten Hartmetallen (z.B. Wolframkarbid mit Fe80Ni2 oder Wolframkarbid mit Fe60Co20Ni20) zugeordnet wird. Eine obere Grenze für den Kohlenstoffgehalt ergibt sich durch das thermische Verhalten der ersten Stoffgruppe.

Invar mit einem Kohlenstoffgehalt von 0,27 Gew.-% kann auf das zweite Hartmetall mit 7,5 Gew.-% Fe80Ni20 bei 1250 Grad Celsius ohne Schwachstellen gefügt werden. Kovar kann mit 0,29 Gew.-% auf dem Hartmetall gefügt werden. Ein Kohlenstoffgehalt des Kovar sollte größer als 0,25 Gew.-% sein. Die zweite Stoffgruppe kann ebenfalls mit dem Hartmetall gefügt werden. 100Cr6 mit einem Kohlenstoffgehalt von 0,81 Gew.-% zeigt keine Sprödphase und war bei 1250 Grad Celsius mechanisch stabil.

Invar kann auch mit der dritten Gruppe der Hartmetalle sintergefügt werden. Bei 1250 Grad Celsius war ergab ein Kohlenstoffgehalt von 0,35 Gew.-% in Invar eine gute Verbindung mit dem Hartmetall aus Wolframkarbid und Fe64.2Ni31Co4.8, Kovar kann bei gleichen Bedingungen mit einem Kohlenstoffgehalt von 0,37 Gew.-% gefügt werden.

Bei einer weiteren Ausführung ist das Fügeverfahren dahingehend abgewandelt, dass der Bohrkopf nicht vorgesintert wird. Der Grünling des Bohrkopfs wird mit dem Grünling des Zwischenstücks zusammengebracht. Bei einer Sintertemperatur von 1250 bis 1460 Grad Celsius werden zugleich die Grünlinge von Bohrkopf und Zwischenstück gesintert.

Versuche einen Grünling des Bohrkopfs aus dem ersten Hartmetall auf ein Zwischenstück aus einem kohlenstoffhaltigen Invar kozusintern schlugen fehl. Zwar nimmt die Aktivität des Kohlenstoffs in dem ersten Hartmetall bei etwa 1380 Grad Celsius sprungartig ab, jedoch reicht dies nicht wohl nicht aus die mit zunehmender Temperatur abnehmende Aktivität in Invar zu kompensieren. Ein Erhöhen der Aktivität durch einen hohen Kohlenstoffanteil von über 50 Gew.-% führt bei den Sintertemperaturen um 1400 Grad Celsius zu einem thermisch instabilen Zwischenstück.

Ein Bohrkopf aus dem zweiten Hartmetall, z.B. Fe80Ni20, kann mit einem Zwischenstück aus Invar mit einem Kohlenstoffgehalt von 0,36 Gew.-% kogesintert werden. Das Zwischenstück erweist sich bei Temperaturen im Bereich von 1300 Grad Celsius bis 1400 Grad Celsius als thermisch stabil und eine Aktivität ist mit 0,35 (bei 1300 Grad Celsius) bis 0,25 (1400 Grad Celsius) als ausreichend hoch verglichen zu der Aktivität von 0,2 in dem zweiten Hartmetall. Ein Kohlenstoffgehalt zwischen 0,3 Gew.-% bis 0,48 Gew.-% ermöglicht ein Kosintern in dem Temperaturbereich.

Ein Bohrkopf aus dem zweiten Hartmetall, z.B. Fe80Ni20, kann mit Kovar mit einem Kohlenstoffgehalt von 0,48 Gew.-% kogesintert werden. Kovar erweist sich gegenüber Invar thermisch stabiler, was einen höheren Kohlenstoffgehalt erlaubt.

## Patentansprüche

1. Bohrer mit einem Bohrkopf aus einem gesinterten kohlenstoffhaltigen Hartmetall, einem Schaft, und einem gesinterten Zwischenstück auf Eisenbasis, welches längs einer Achse zwischen dem Bohrkopf und dem Schaft angeordnet ist, **dadurch kennzeichnet, dass** eine Aktivität von Kohlenstoff in dem Zwischenstück für wenigstens eine Temperatur in einem Temperaturbereich von 1100 Grad Celsius bis 1470 Grad Celsius gleich und/oder größer ist als eine Aktivität von Kohlenstoff in dem Hartmetall bei der Temperatur.

2. Bohrer nach Anspruch 1, **dadurch gekennzeichnet, dass** das Zwischenstück einen Kohlenstoffgehalt von wenigstens 0,20 Gew.-% aufweist.

3. Bohrer nach Anspruch 1 oder 2, **dadurch gekennzeichnet, dass** ein Binder des gesinterten Hartmetalls einen Anteil zwischen 6 Gew.-% und 9 Gew.-% aufweist.

4. Bohrer nach Anspruch 3, **dadurch gekennzeichnet, dass** der Binder Kobalt mit einem Anteil von wenigstens 80 Gew.-% und das Zwischenstück einen Kohlenstoffgehalt von zwischen 0,6 Gew.-% und 1,1 Gew.-% aufweist.

5. Bohrer nach Anspruch 3, **dadurch gekennzeichnet, dass** der Binder Kobalt mit einem Anteil zwischen 18 Gew.-% und 23 Gew.-% und das Zwischenstück einen Kohlenstoffgehalt zwischen 0,2 Gew.-% und 1,1 Gew.-% aufweist.

6. Bohrer nach einem der vorhergehenden Ansprüche, **dadurch gekennzeichnet, dass** eine Länge des Bohrkopfs längs der Achse gleich oder größer als eine Länge des Zwischenstücks ist.

7. Herstellungsverfahren für einen Bohrer mit den Schritten:
Formen eines Grünlings aus einem kohlenstoffhaltigen Hartmetall und einem Binder zu einem Bohrkopf,
Formen eines Zwischenstücks aus einem kohlenstoffhaltigen Eisen-Basis-pulver,
Fügen des Bohrkopfs und des Zwischenstücks zu einem Halbzeug,
Sintern des Halbzeugs, und materialschlüssiges Fügen des gesinterten Halbzeugs auf einem Schaft,
**gekennzeichnet durch** eine Sintertemperatur, bei welcher eine Aktivität des Kohlenstoffs in dem Zwischenstück wenigstens so groß wie die Aktivität des Kohlenstoffs in dem Grünling ist.

8. Herstellungsverfahren nach Anspruch 7, **dadurch gekennzeichnet, dass** der Bohrkopf als Grünling mit dem Grünling des Zwischenstücks kogesintert wird und die Temperatur in einem Bereich zwischen 1250 Grad Celsius und 1470 Grad Celsius liegt.

9. Herstellungsverfahren nach Anspruch 8, **dadurch gekennzeichnet, dass** der Bohrkopf als Grünling geformt wird, der Grünling des Bohrkopfs bei 1250 Grad Celsius bis 1470 Grad Celsius gesintert und der gesinterte Bohrkopf mit dem Grünling des Zwischenstücks bei der Temperatur sintergefügt wird, welche im Bereich zwischen 1100 Grad Celsius und 1350 Grad Celsius liegt.

10. Herstellungsverfahren nach Anspruch 8 oder 9, **dadurch gekennzeichnet, dass** die Aktivität des Kohlenstoffs in dem Zwischenstück bei der Temperatur größer als 0,3 ist.

11. Herstellungsverfahren nach einem der Ansprüche 8 bis 11, **dadurch gekennzeichnet, dass** das Hartmetall 6 Gew.-% bis 9 Gew.-% metallischen Binder und das kohlenstoffhaltige Eisen-Basis-pulver wenigstens 0,20 Gew.-% Kohlenstoff enthält.

12. Herstellungsverfahren nach Anspruch 11, **dadurch gekennzeichnet, dass** das kohlenstoffhaltige Eisen-Basis-pulver zwischen 0,2 Gew.-% und 1,1 Gew.-% Kohlenstoff enthält.

13. Herstellungsverfahren nach Anspruch 11, **dadurch gekennzeichnet, dass** der metallische Binder wenigstens 50 Gew.-% Kobalt enthält und das kohlenstoffhaltige Eisenpulver zwischen 0,6 Gew.-% und 1,1 Gew.-% Kohlenstoff enthält.

14. Herstellungsverfahren nach Anspruch 11, **dadurch gekennzeichnet, dass** der Binder zwischen 18 Gew.-% und 23 Gew.-% Kobalt enthält.

15. Herstellungsverfahren nach Anspruch 11, **dadurch gekennzeichnet, dass** das Zwischenstück zwischen 1,2 Gew.-% und 2,0 Gew.-% Chrom und einen Kohlenstoffanteil von 0,7 bis 1,1 Gew.-% hat.

## Claims

1. Drill with a drill head made from a sintered hard metal containing carbon, a shaft, and an iron-based sintered intermediate piece, which is arranged along an axis between the drill head and the shaft, **characterised in that** for at least a temperature in a temperature range from 1100 degrees Celsius to 1470 degrees Celsius a carbon activity in the intermediate piece is the same and/or greater than a carbon activity in the hard metal at the temperature.

2. Drill according to claim 1, **characterised in that** the intermediate piece has a carbon content of at least 0.20% by weight.

3. Drill according to claim 1 or 2, **characterised in that** a binder of the sintered hard metal has a proportion of between 6% by weight and 9% by weight.

4. Drill according to claim 3, **characterised in that** the binder has cobalt in a proportion of at least 80% by weight and the intermediate piece has a carbon content of between 0.6% by weight and 1.1 % by weight.

5. Drill according to claim 3, **characterised in that** the binder has cobalt in a proportion of between 18% by weight and 23% by weight and the intermediate piece has a carbon content of between 0.2% by weight and 1.1 % by weight.

6. Drill according to one of the previous claims, **characterised in that** a length of the drill head along the axis is the same or greater than a length of the intermediate piece.

7. Manufacturing method for a drill with the steps:
Forming a preform made from a hard metal containing carbon and a binder into a drill head,
Forming an intermediate piece made from an iron-based powder containing carbon,
Joining the drill head and the intermediate piece together into a semi-finished product,
Sintering the semi-finished product and joining the sintered semi-finished product in a metallurgically bonded way on a shaft, **characterised by** a sintering temperature, at which a carbon activity in the intermediate piece is at least as great as the carbon activity in the preform.

8. Manufacturing method according to claim 7, **characterised in that** the drill head is cosintered with the preform of the intermediate piece as a preform and the temperature is in a range between 1250 degrees Celsius and 1470 degrees Celsius.

9. Manufacturing method according to claim 8, **characterised in that** the drill head is formed as a preform, the preform of the drill head is sintered at 1250 degrees Celsius to 1470 degrees Celsius and the sintered drill head is joined with the preform of the intermediate piece by sintering at a temperature which lies in the range between 1100 degrees Celsius and 1350 degrees Celsius.

10. Manufacturing method according to claim 8 or 9, **characterised in that** the carbon activity in the intermediate piece at the temperature is greater than 0.3.

11. Manufacturing method according to one of claims 8 to 11, **characterised in that** the hard metal contains 6% by weight to 9% by weight of metallic binder and the iron-based powder containing carbon contains at least 0.20% by weight of carbon.

12. Manufacturing method according to claim 11, **characterised in that** the iron-based powder containing carbon contains between 0.2% by weight and 1.1 % by weight of carbon.

13. Manufacturing method according to claim 11, **characterised in that** the metallic binder contains at least 50% by weight of cobalt and the iron powder containing carbon contains between 0.6% by weight and 1.1 % by weight of carbon.

14. Manufacturing method according to claim 11, **characterised in that** the binder contains between 18% by weight and 23% by weight of cobalt.

15. Manufacturing method according to claim 11, **characterised in that** the intermediate piece has between 1.2% by weight and 2.0% by weight of chromium and a carbon proportion of 0.7 to 1.1 % by weight.

## Revendications

1. Foret comportant une tête de foret en un métal dur fritté contenant du carbone, une tige, et une pièce intermédiaire frittée à base de fer, qui est disposée le long d'un axe entre la tête de foret et la tige, **caractérisé en ce qu'**une activité du carbone dans la pièce intermédiaire, pour au moins une température comprise dans la plage de températures de 1100 degrés Celsius à 1470 degrés Celsius, est inférieure et/ou égale à une activité du carbone dans le métal dur à cette température.

2. Foret selon la revendication 1, **caractérisé en ce que** la pièce intermédiaire présente une teneur en carbone d'au moins 0,20 % en poids.

3. Foret selon la revendication 1 ou 2, **caractérisé en ce qu'**un liant du métal dur fritté présente une proportion comprise entre 6 % en poids et 9 % en poids.

4. Foret selon la revendication 3, **caractérisé en ce que** le liant contient du cobalt selon une proportion d'au moins 80 % en poids, et la pièce intermédiaire une teneur en carbone comprise entre 0,6 % en poids et 1,1 % en poids.

5. Foret selon la revendication 3, **caractérisé en ce que** le liant contient du cobalt selon une proportion comprise entre 18 % en poids et 23 % en poids, et la pièce intermédiaire une teneur en carbone comprise entre 0,2 % en poids et 1,1 % en poids.

6. Foret selon l'une des revendications précédentes, **caractérisé en ce qu'**une longueur de la tête de foret le long de l'axe est supérieure ou égale à une longueur de la pièce intermédiaire.

7. Procédé de fabrication d'un foret, comprenant les étapes suivantes :
façonnage d'une ébauche en un métal dur contenant du carbone et un liant, pour donner une tête de foret,
façonnage d'une pièce intermédiaire en une poudre à base de fer contenant du carbone,
assemblage de la tête de foret et de la pièce intermédiaire pour donner un semi-produit,
frittage du semi-produit, et
assemblage, par une liaison avec correspondance de matière, du semi-produit fritté sur une tige,
**caractérisé par** une température de frittage à laquelle une activité du carbone dans la pièce intermédiaire est au moins aussi grande que l'activité du carbone dans l'ébauche.

8. Procédé de fabrication selon la revendication 7, **caractérisé en ce que** la tête de foret est, en tant qu'ébauche, co-frittée avec l'ébauche de la pièce intermédiaire, et que la température est comprise dans une plage de 1250 degrés Celsius à 1470 degrés Celsius.

9. Procédé de fabrication selon la revendication 8, **caractérisé en ce que** la tête de foret est façonnée en tant qu'ébauche, l'ébauche de la tête de foret est frittée à 1250 degrés Celsius à 1470 degrés Celsius, et la tête de foret frittée est assemblée par frittage avec l'ébauche de la pièce intermédiaire à la température qui est comprise dans la plage entre 1100 degrés Celsius et 1350 degrés Celsius.

10. Procédé de fabrication selon la revendication 8 ou 9, **caractérisé en ce que** l'activité du carbone dans la pièce intermédiaire est, à la température, supérieure à 0,3.

11. Procédé de fabrication selon l'une des revendications 8 à 11, **caractérisé en ce que** le métal dur contient 6 % en poids à 9 % en poids d'un liant métallique, et que la poudre à base de fer contenant du carbone contient au moins 0,20 % en poids de carbone.

12. Procédé de fabrication selon la revendication 11, **caractérisé en ce que** la poudre à base de fer contenant du carbone contient de 0,2 % en poids à 1,1 % en poids de carbone.

13. Procédé de fabrication selon la revendication 11, **caractérisé en ce que** le liant métallique contient au moins 50 % en poids de cobalt et que la poudre de fer contenant du carbone contient de 0,6 % en poids à 1,1 % en poids de carbone.

14. Procédé de fabrication selon la revendication 11, **caractérisé en ce que** le liant contient de 18 % en poids à 23 % en poids de cobalt.

15. Procédé de fabrication selon la revendication 11, **caractérisé en ce que** la pièce intermédiaire contient de 1,2 % en poids à 2,2 % en poids de chrome, et présente une teneur en carbone de 0,7 à 1,1 % en poids.
